# EUROPÄISCHE PATENTSCHRIFT

(11) **EP 4 509 414 B1**
(45) Veröffentlichungstag und Bekanntmachung des Hinweises auf die Patenterteilung: **01.07.2026**
(21) Anmeldenummer: 24192989.2
(22) Anmeldetag: 05.08.2024
(51) Int. Cl.: B64G 1/22

(54) **MECHANISCHE UMSCHALTEINHEIT, SYSTEM UND SATELLIT**
MECHANICAL SWITCHING UNIT, SYSTEM AND SATELLITE
UNITÉ DE COMMUTATION MÉCANIQUE, SYSTÈME ET SATELLITE

(30) Priorität: 10.08.2023 DE 102023121347
(43) Veröffentlichungstag der Anmeldung: 19.02.2025
(73) Patentinhaber: Tesat Spacecom GmbH & Co. KG, 71522 Backnang (DE)
(72) Erfinder: HANDEL, Heiner, 71522 Backnang (DE); HELLWEG, Bastian, 71522 Backnang (DE); REICHERTER, Daniel, 71522 Backnang (DE); ROSÉN, Erik, 71522 Backnang (DE); WACKER, Andreas, 71522 Backnang (DE)
(74) Vertreter: LKGLOBAL Partnerschaftsgesellschaft mbB

(56) Entgegenhaltungen:
- EP-B1- 2 990 681
- BR-A- 9 606 511
- RU-C1- 2 046 077
- US-A1- 2003 094 057
- US-A1- 2007 131 507

## Beschreibung

### Technisches Gebiet

Die vorliegende Beschreibung betrifft eine mechanische Umschalteinheit, mit der eine Funktionskomponente wahlweise in eine von mehreren Positionen gebracht und in dieser Position gehalten werden kann. Weiterhin betrifft die Beschreibung ein System mit einer solchen mechanischen Umschalteinheit sowie einen Satelliten mit einem solchen System.

### Technischer Hintergrund

An Bord von Raumfahrzeugen, wie beispielsweise Satelliten, finden heutzutage komplexe technische Komponenten Verwendung. Diese technischen Komponenten dienen beispielsweise dazu, Signale zu erzeugen, verarbeiten, verändern, senden und/oder zu empfangen oder bestimmte Signalpfade in einer Anordnung an Bord des Raumfahrzeugs zu schalten.

Zu diesem Zweck kann es erforderlich sein, eine Funktionskomponente in eine vorgegebene Position zu bringen und in dieser Position zu halten. Mit zunehmender Komplexität und Leistungsfähigkeit der technischen Systeme nimmt auch die Anforderung an die Genauigkeit der Positionierung von Funktionskomponenten stetig zu. So ist es beispielsweise erforderlich, dass eine optische Komponente, sei es ein optischer Empfänger oder ein optischer Sender oder eine in einen optischen Pfad eingebrachte optische Komponente wie ein optischer Filter, mit hoher Genauigkeit in eine bestimmte Position gebracht wird, um Anforderungen an die Übertragungsbandbreite und Kanalgüte eines optischen Übertragungspfads zu erfüllen. Die Funktionskomponente kann aber auch eine Hochfrequenzkomponente sein, welche in einem Übertragungspfad von hochfrequenten Signalen an Bord des Satelliten in eine von mehreren Positionen geschaltet werden muss, beispielsweise um einen von mehreren möglichen Signalpfaden auszuwählen.

Um eine hohe Genauigkeit bei der Positionierung der Funktionskomponente zu erreichen, können beispielsweise präzise Antriebe und/oder Getriebe verwendet werden. Allerdings können solche präzisen Antriebe und/oder Getriebe anfällig sein für Belastungen, welche beim Start und/oder Transport eines Satelliten in die Erdumlaufbahn auftreten. Durch hohe Beschleunigungen können Kräfte auf die Funktionskomponente sowie auf den Antrieb und/oder das Getriebe wirken und dadurch ein Spiel in die Kinematik einbringen, wodurch die Genauigkeit der Positionierung der Funktionskomponente negativ beeinflusst wird.

BR 9 605 511 A beschreibt eine Betätigungsvorrichtung zum Betätigen einer Kupplung. Hierbei wird ein Malteserkreuzgetriebe genutzt, um eine Drehbewegung in eine translatorische Bewegung umzusetzen und auf diese Weise eine Schaltstange zu bewegen.

### Beschreibung

Es kann daher als Aufgabe betrachtet werden, eine mechanische Umschalteinheit anzugeben, mit der eine Funktionskomponente in eine von mehreren Positionen geschaltet und in dieser Position wiederholbar und mit hoher Genauigkeit gehalten wird.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß der Erfindung ist eine mechanische Umschalteinheit zum wahlweisen Bewegen einer Funktionskomponente aus einer ersten Position in eine zweite Position angegeben. Die mechanische Umschalteinheit weist ein Antriebselement, ein Abtriebselement, einen ersten Haltepunkt und einen zweiten Haltepunkt auf. Das Antriebselement ist ausgestaltet, von einem Antrieb in eine Bewegung versetzt zu werden. Das Abtriebselement steht mit dem Antriebselement in Eingriff und ist ausgestaltet, von dem Antriebselement in Bewegung versetzt zu werden. Das Antriebselement steht so mit dem Abtriebselement in Eingriff, dass das Abtriebselement aus der ersten Position in die zweite Position, und umgekehrt, bewegbar ist und dabei die Funktionskomponente aus der ersten Position in die zweite Position, und umgekehrt, bewegt. Der erste Haltepunkt ist ausgestaltet, in der ersten Position eine erste Haltekraft auf die Funktionskomponente auszuüben und die Funktionskomponente in der ersten Position zu halten. Der zweite Haltepunkt ist ausgestaltet, in der zweiten Position eine zweite Haltekraft auf die Funktionskomponente auszuüben und die Funktionskomponente in der zweiten Position zu halten.

Die mechanische Umschalteinheit weist bevorzugt auch ein Gehäuse auf, an welchem das Antriebselement, das Abtriebselement, der erste Haltepunkt und der zweite Haltepunkt angeordnet sind. Das Antriebselement ist bewegbar an oder in dem Gehäuse montiert. Ebenso ist das Abtriebselement bewegbar an oder in dem Gehäuse montiert. Der erste Haltepunkt und der zweite Haltepunkt sind starr an dem Gehäuse montiert.

Der erste Haltepunkt und der zweite Haltepunkt sind räumlich voneinander beabstandet, so dass die Funktionskomponente an dem ersten Haltepunkt und dem zweiten Haltepunkt in unterschiedlichen Positionen ausgerichtet ist bzw. unterschiedliche Orientierungen aufzeigt. Der erste Haltepunkt und der zweite Haltepunkt erfüllen die Funktion einer Haltefläche oder einer Auflagefläche, auf der die Funktionskomponente aufliegt, um in der entsprechenden Position zusätzlich zu dem Aufliegen durch eine aktive Haltekraft, wie weiter unten beschrieben, gehalten zu werden.

Die hierin beschriebene mechanische Umschalteinheit zeichnet sich insbesondere dadurch aus, dass das Bewegen der Funktionskomponente aus der ersten Position in die zweite Position oder umgekehrt sowie das Halten der Funktionskomponente in der ersten Position oder in der zweiten Position voneinander funktional getrennt sind. Das Bewegen der Funktionskomponente wird herbeigeführt durch das Antriebselement in Zusammenarbeit mit dem Abtriebselement. Das Halten in der jeweiligen Position hingegen ist als Funktion dem ersten Haltepunkt oder dem zweiten Haltepunkt zugewiesen.

Durch diesen Aufbau erfolgt eine Art mechanischer Entkopplung zwischen dem Halten in der ersten oder zweiten Position und dem Bringen in die erste oder zweite Position. Gerade beim Einsatz in der Raumfahrt reduziert dieser Aufbau die Belastung eines Antriebs, weil die beim Start auftretenden Kräfte sich kaum oder gar nicht auf den Antrieb auswirken, weil es nicht der Antrieb und das Getriebe sind, die die Funktionskomponente in Position halten. Vielmehr werden diese Kräfte durch den ersten Haltepunkt oder den zweiten Haltepunkt aufgenommen.

Der erste Haltepunkt und der zweite Haltepunkt sind von dem Antriebselement und dem Abtriebselement getrennt. Wenn die Funktionskomponente an dem ersten Haltepunkt oder dem zweiten Haltepunkt anliegt, werden auf die Funktionskomponente wirkende Kräfte auch von dem ersten Haltepunkt oder dem zweiten Haltepunkt aufgenommen und wirken kaum oder nicht auf das Antriebselement und das Abtriebselement.

Selbst wenn allerdings Kräfte auf das Antriebselement und das Abtriebselement wirken und dadurch ein Spiel in dem Eingriff vergrößern, hat dies keinen Einfluss auf die Genauigkeit der Positionierung der Funktionskomponente in der ersten Position und der zweiten Position, weil die erste Position und die zweite Position von dem ersten Haltepunkt und dem zweiten Haltepunkt definiert wird.

Dadurch wird auch der Verschleiß am Antrieb und/oder der Umschalteinheit reduziert. Der erste Haltepunkt und der zweite Haltepunkt sind starr und unbeweglich mit der mechanischen Umschalteinheit verbunden, beispielsweise ist der erste Haltepunkt und der zweite Haltepunkt mit dem Gehäuse der Umschalteinheit verbunden. Somit wird auch sichergestellt, dass die zu positionierende Funktionskomponente sowohl in der ersten Position als auch in der zweiten Position wiederholbar mit einer sehr hohen Genauigkeit gehalten wird und sich ein Verschleiß an dem Antrieb und/oder der Umschalteinheit nicht auf die Genauigkeit der Positionierung der Funktionskomponente auswirkt.

In einer Ausführungsform weist das Antriebselement einen Stift auf und das Abtriebselement weist einen Schlitz auf. Der Stift greift in den Schlitz ein, um eine Bewegung des Antriebselementes auf das Abtriebselement zu übertragen.

Beispielsweise erstreckt sich der Stift an dem Antriebselement in eine Richtung senkrecht zu der Bewegungsebene des Antriebselementes.

Das Antriebselement kann eine translatorische oder eine rotatorische Bewegung ausführen. Das Antriebselement kann beispielsweise ein Antriebsrad sein und für eine rotatorische Bewegung ausgestaltet sein.

Wenn das Antriebselement ein Antriebsrad ist und eine Rotationsbewegung ausführt, verläuft der Stift parallel zu einer Rotationsachse des Antriebsrads.

Das Abtriebselement kann ebenfalls als Rad ausgestaltet sein. In diesem Fall verläuft der Schlitz in dem Abtriebsrad in radialer Richtung.

Wenn sich das Antriebsrad um seine Mittelachse dreht, wird der Stift auf einer Kreisbahn um die Mittelachse des Antriebsrades bewegt und führt das Abtriebsrad mit, weil der Stift in den Schlitz eingreift. Bei dieser Rotationsbewegung kann sich der Stift relativ zu dem Schlitz so bewegen, dass sich der Stift in radialer Richtung entlang des Schlitzes bewegt, hierbei aber das Abtriebsrad ebenfalls in eine Rotationsbewegung um dessen Mittelachse versetzt wird.

**In** einer weiteren Ausführungsform ist das Antriebselement ein Antriebsrad, welches ausgestaltet ist, eine Rotationsbewegung auszuführen, und das Abtriebselement ist ein Abtriebsrad, welches ausgestaltet ist, eine Rotationsbewegung auszuführen.

Das Antriebsrad und das Abtriebsrad können in der Art eines Malteserkreuzgetriebes ineinandergreifen. Hierbei führt das Antriebsrad das Abtriebsrad während eines Teils der Rotationsbewegung mit, wenn das Antriebsrad und das Abtriebsrad in Eingriff miteinander stehen. Grundsätzlich gibt es bei einem Malteserkreuzgetriebe neben einem ersten Zustand, in welchem das Antriebsrad und das Abtriebsrad in Eingriff miteinander stehen und eine Bewegung von dem einen auf das andere übertragen wird, einen zweiten Zustand, in welchem das Antriebsrad und das Abtriebsrad nicht in Eingriff miteinander stehen. **Im** zweiten Zustand dreht sich das Antriebsrad weiter, während das Abtriebsrad nicht weitergedreht wird. Ab einem bestimmten Punkt greift der Stift in einen anderen Schlitz an dem Abtriebsrad ein und führt das Abtriebsrad wieder mit.

Vorliegend wird dieser Mechanismus des Malteserkreuzgetriebes genutzt, um die Funktionskomponente zu bewegen, indem das Antriebsrad das Abtriebsrad in Bewegung versetzt, wobei das Abtriebsrad mit der Funktionskomponente über eine Welle gekoppelt ist und die Funktionskomponente ebenfalls bewegt wird.

Insbesondere wird das Malteserkreuzgetriebe vorliegend so genutzt, dass das Antriebselement Bewegungen in entgegengesetzte Richtungen ausführen kann, wodurch auch das Abtriebselement in entgegengesetzte Richtungen bewegt werden kann, um die Funktionskomponente aus der ersten Position in die zweite Position und umgekehrt zu bewegen.

Somit ist es denkbar, dass das Antriebselement und das Abtriebselement in jedem Zustand der Umschalteinheit miteinander in Eingriff stehen. Der prinzipielle Aufbau des Malteserkreuzgetriebes dient vorliegend dazu, dass ein Spiel zwischen Antriebselement und Abtriebselement ermöglicht wird, damit auf die Funktionskomponente wirkende Kräfte nicht auf einen Antrieb durchschlagen.

In einer weiteren Ausführungsform weist der erste Haltepunkt ein erstes magnetisches Element auf, und/oder der zweite Haltepunkt weist ein zweites magnetisches Element auf.

An dem ersten Haltepunkt und/oder an dem zweiten Haltepunkt kann beispielsweise ein Permanentmagnet oder ein Elektromagnet angeordnet sein, um eine Haltekraft auf ein Halteelement der Funktionskomponente auszuüben und dadurch die Funktionskomponente in der entsprechenden Position zu halten.

In dem Halteelement der Funktionskomponente kann ebenfalls ein magnetisches Element angeordnet sein, damit das magnetische Element in dem ersten Haltepunkt und dem zweiten Haltepunkt das Halteelement anzieht und eine Haltekraft darauf ausübt. Alternativ oder zusätzlich kann das Halteelement aus einem ferromagnetischen Material gefertigt sein oder ein ferromagnetisches Material aufweisen.

Um die Funktionskomponente aus der ersten Position oder der zweiten Position zu bewegen, muss ein Antrieb dann zunächst die Haltekraft überwinden. Sobald sich die Funktionskomponente der anderen Position nähert, übt das magnetische Element eine Anziehungskraft aus und zieht die Funktionskomponente in Richtung der anderen Position. Selbst wenn zwischen dem Antriebselement und dem Abtriebselement ein geringes Spiel vorhanden ist, wird die Funktionskomponente durch die Haltekraft an dem ersten Haltepunkt oder dem zweiten Haltepunkt fixiert und diese Haltekraft muss nicht durch den Eingriff zwischen Antriebselement und Abtriebselement aufgebracht werden. Gerade durch einen Verschleiß an diesem Eingriff kann es nämlich sein, dass durch das resultierende Spiel die Funktionskomponente nicht mit hoher Präzision an der gleichen Position gehalten wird, wenn das Halten durch das Antriebselement und das Abtriebselement erfolgt.

**In** einer weiteren Ausführungsform weist der erste Haltepunkt eine erste Auflagefläche auf, wobei die erste Auflagefläche ausgestaltet ist, dass die Funktionskomponente in der ersten Position auf der ersten Auflagefläche aufliegt, und/oder weist der zweite Haltepunkt eine zweite Auflagefläche auf, wobei die zweite Auflagefläche ausgestaltet ist, dass die Funktionskomponente in der zweiten Position auf der zweiten Auflagefläche aufliegt.

Nachdem die entsprechenden Auflageflächen mit Bezug zu dem Gehäuse der mechanischen Umschalteinheit unbeweglich sind, wird die Funktionskomponente in der ersten Position und der zweiten Position mit einer hohen Genauigkeit gehalten. Selbst wenn zwischen dem Antriebselement und dem Abtriebselement ein Spiel vorliegt, wird die von den Haltepunkten ausgeübte Haltekraft die Funktionskomponente wiederholt und mit hoher Präzision in dieselbe Position ziehen. Die Genauigkeit der Positionierung der Funktionskomponente in der ersten Position und der zweiten Position ist damit unabhängig von der Genauigkeit des Antriebs, welcher von dem Antriebselement und dem Abtriebselement gebildet wird.

**In** einer weiteren Ausführungsform weist der erste Haltepunkt eine erste Vertiefung auf, wobei die erste Vertiefung ausgestaltet ist, dass die Funktionskomponente in der ersten Position in der ersten Vertiefung einrastet, und/oder weist der zweite Haltepunkt eine zweite Vertiefung auf, wobei die zweite Vertiefung ausgestaltet ist, dass die Funktionskomponente in der zweiten Position in der zweiten Vertiefung einrastet.

Die erste Vertiefung und die zweite Vertiefung sind beispielsweise in dem Gehäuse der mechanischen Umschalteinheit an dem ersten Haltepunkt oder dem zweiten Haltepunkt oder in der Nähe des ersten Haltepunkts oder des zweiten Haltepunkts angeordnet. Wenn die Funktionskomponente in der ersten Position ist, rastet ein Halteelement der Funktionskomponente in der ersten Vertiefung ein. **In** der zweiten Position rastet das Halteelement der Funktionskomponente in der zweiten Vertiefung ein. Dies kann dazu beitragen, dass eine höhere Kraft erforderlich ist, um die Funktionskomponente aus der ersten Position oder der zweiten Position zu bewegen.

Die beiden Vertiefungen können zusätzlich oder alternativ zu der Verwendung eines magnetischen Elementes an dem ersten Haltepunkt und dem zweiten Haltepunkt vorgesehen sein.

Es ist denkbar, dass die mechanische Umschalteinheit ohne feste Auflageflächen, dafür aber nur mit Vertiefungen ausgestaltet ist. Beispielsweise können mehrere Vertiefungen an vorgegebenen Stellen entlang einer Bewegungslinie der Funktionskomponente angeordnet sein. Dies ermöglicht es, dass die Funktionskomponente ohne Richtungsumkehr von einer Vertiefung in die nächste geschaltet werden kann. Hierbei kann die Funktionskomponente beispielsweise eine Rotationsbewegung ausführen.

**In** einer weiteren Ausführungsform ist das Antriebselement so mit dem Abtriebselement gekoppelt, dass das Abtriebselement in zwei entgegengesetzte Richtungen bewegbar ist.

Das Abtriebselement kann damit die Funktionskomponente aus der ersten Position in die zweite Position und aus der zweiten Position zurück in die erste Position bringen. Dies kann beispielsweise dadurch erfolgen, dass ein mit dem Antriebselement gekoppelter Antrieb in unterschiedliche Richtungen bewegt wird.

Gemäß einem weiteren Aspekt ist ein System angegeben, welches eine mechanische Umschalteinheit wie hierin beschrieben, einen Antrieb und eine Funktionskomponente aufweist. Der Antrieb ist mit dem Antriebselement derart gekoppelt, dass eine Bewegung des Antriebs auf das Antriebselement übertragen wird. Die Funktionskomponente ist mit dem Abtriebselement derart gekoppelt, dass eine Bewegung des Abtriebselementes auf die Funktionskomponente übertragen wird.

Der Antrieb ist beispielsweise ein elektromechanischer Antrieb, wie ein Elektromotor. Alternativ ist denkbar, dass der Antrieb ein hydraulisches oder pneumatisches System ist. Der Antrieb stellt grundsätzlich eine Bewegung bereit, welche auf das Antriebselement übertragen wird. Der Antrieb kann eine Drehbewegung oder eine translatorische Bewegung ausführen und beispielsweise mit einer Rotationswelle des Antriebselementes gekoppelt sein.

Ebenso kann die Funktionskomponente auf einer Rotationswelle des Abtriebselementes angeordnet sein. Wenn sich das Abtriebselement um die Rotationswelle dreht, wird die Funktionskomponente auf dieser Drehbewegung mitgeführt. An der Funktionskomponente ist ein Halteelement angeordnet, welches wie oben beschrieben mit dem ersten Haltepunkt und dem zweiten Haltepunkt (sowie den zugehörigen Auflageflächen und Vertiefungen) zusammenwirkt.

**In** einer Ausführungsform ist die Funktionskomponente ein optisches Element oder eine Hochfrequenzkomponente.

Das optische Element kann beispielsweise ein optischer Filter, Emitter oder ein optischer Empfänger sein, welches in eine bestimmte Position und/oder Orientierung gebracht und in dieser Position und/oder Orientierung präzise gehalten werden muss. Allgemein ausgedrückt kann es sich bei dem optischen Element um eine optische Komponente handeln, welche die geometrischen und/oder spektralen Eigenschaften eines optischen Strahls beeinflussen kann. Im Falle einer Hochfrequenzkomponente kann diese in unterschiedliche Positionen gebracht werden, beispielsweise um unterschiedliche Signalpfade zu schalten.

In einem weiteren Aspekt ist ein Satellit angegeben, welcher ein System wie hierin beschrieben aufweist.

Der hier beschriebene Aufbau der mechanischen Umschalteinheit kann vorteilhaft in der Raumfahrt verwendet werden, weil hier für bestimmte Funktionskomponenten (beispielsweise optische Elemente oder Hochfrequenz Komponenten) eine hohe und wiederholbare Präzision bei der Positionierung erforderlich ist, allerdings beim Start und/oder beim Transport eines Raumfahrzeugs hohe Kräfte wirken können, welche zu Verschleiß in den mechanischen Komponenten einer Umschalteinheit führen können.

Die hier beschriebene Umschalteinheit verwendet verschiedene strukturelle Elemente für die beiden Aufgaben des Bewegens und des Haltens der Funktionskomponente. Für das Bewegen wird ein Antrieb in Zusammenwirkung mit einem Antriebselement und einem Abtriebselement verwendet. Für das Halten werden statische Haltepunkte verwendet. Somit wirkt sich ein Spiel in der Kinematik der Umschalteinheit nicht auf die Positionierungsgenauigkeit in der ersten Position und der zweiten Position aus. Kräfte, die beim Start und/oder beim Transport eines Satelliten in die Erdumlaufbahn auftreten, können demgemäß sich höchstens auf das Spiel in der Kinematik (Antrieb, Antriebselement, Abtriebselement) auswirken, was aber keinen oder höchstens einen geringen Einfluss auf die Positioniergenauigkeit an dem ersten Haltepunkt und/oder dem zweiten Haltepunkt hat. Der erste Haltepunkt und der zweite Haltepunkt sind bevorzugt an dem Gehäuse der mechanischen Umschalteinheit angeordnet und weisen eine Festigkeit auf, dass durch die beim Start und/oder Transport auftretenden Kräfte die Haltepunkte nicht plastisch verformt werden.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer mechanischen Umschalteinheit;
- Fig. 2: eine schematische Darstellung eines Systems mit einem Antrieb, einer mechanischen Umschalteinheit und einer Funktionskomponente;
- Fig. 3: eine schematische Darstellung eines Satelliten.

### Detaillierte Beschreibung

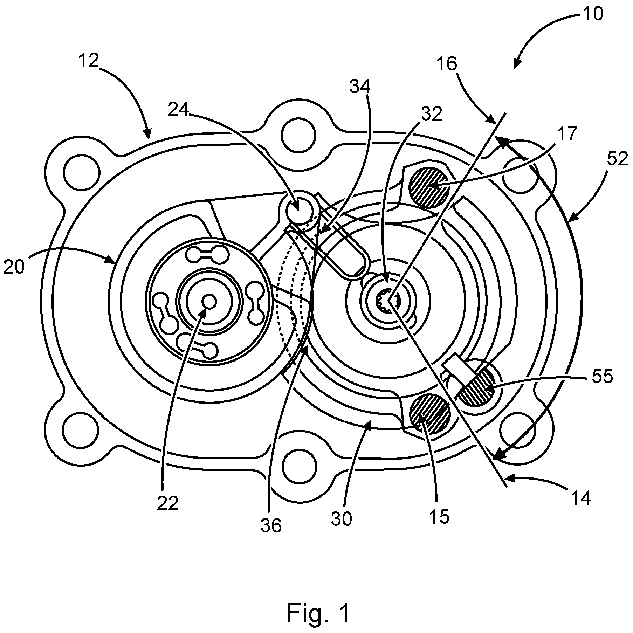

Fig. 1 zeigt eine mechanische Umschalteinheit 10. Die mechanische Umschalteinheit 10 weist ein Gehäuse 12 auf. Die verbleibenden Komponenten sind an dem Gehäuse 12 angeordnet. Die mechanische Umschalteinheit 10 weist ein Antriebselement 20, welches auch als Eingang bezeichnet werden kann, auf. Weiterhin weist die mechanische Umschalteinheit 10 ein Abtriebselement 30, welches auch als Ausgang bezeichnet werden kann, auf.

Das Antriebselement 20 ist als Antriebsrad ausgestaltet und über eine Rotationswelle 22 mit dem Gehäuse 12 verbunden. Das Antriebselement 20 ist für eine Drehbewegung um die Rotationswelle 22 ausgestaltet, wobei die Rotationswelle 22 gleichzeitig auch eine Mittelachse des Antriebselementes 20 darstellt. Das Antriebselement 20 weist einen Stift 24 auf. Mindestens abschnittsweise grenzt das Antriebselement 20 an eine Kontur 36 des Abtriebselementes 30 an.

Das Abtriebselement 30 ist ebenfalls als Abtriebsrad ausgestaltet und über eine Antriebswelle 32 mit dem Gehäuse 12 verbunden. Die Antriebswelle 32 bildet die Mittelachse der Drehbewegung des Abtriebselementes 30 und verbindet das Abtriebselement 30 mit der Funktionskomponente. Das Abtriebselement 30 weist einen radialen Schlitz 34 auf.

Der Stift 24 greift in den Schlitz 34 ein. Somit stehen das Antriebselement 20 und das Abtriebselement 30 miteinander in Eingriff. Wenn sich in der gezeigten Darstellung das Antriebselement 20 im Uhrzeigersinn dreht, führt der Stift 24 das Abtriebselement 30 mit. Der Stift 24 führt hierbei auch eine Relativbewegung in dem Schlitz 34 aus und nähert sich der Mittelachse 32. Das Abtriebselement 30 führt eine Drehbewegung entgegen dem Uhrzeigersinn aus und führt die Funktionskomponente bei dieser Drehbewegung mit.

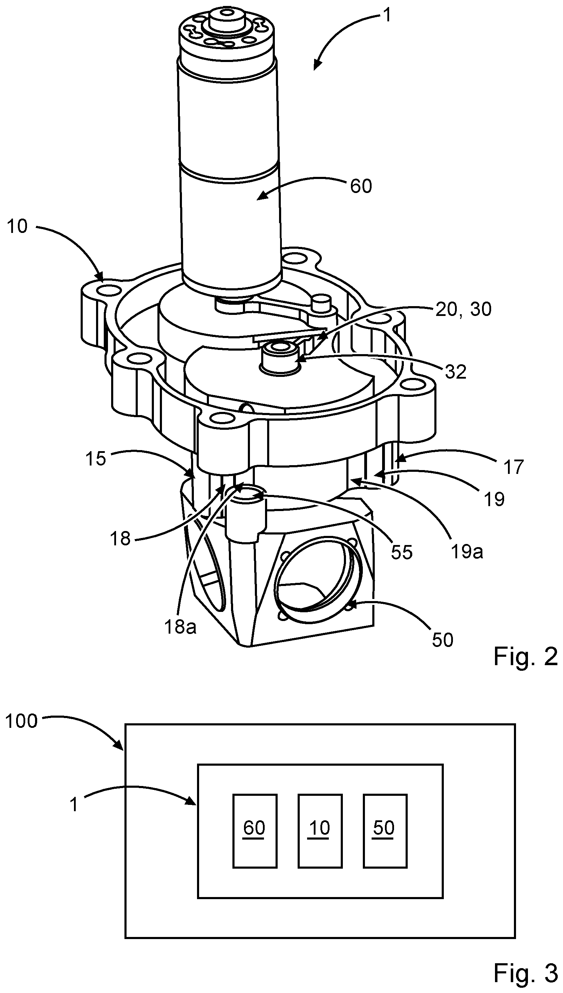

An dem Gehäuse 12 ist eine erste Haltepunkt 15 und ein zweiter Haltepunkt 17 angeordnet. Wie dargestellt kann die Funktionskomponente eine erste Position 14 einnehmen, wenn sie an dem ersten Haltepunkt 15 anliegt. Die Funktionskomponente nimmt eine zweite Position 16 ein, wenn sie an dem zweiten Haltepunkt 17 anliegt. Stellvertretend für die Funktionskomponente ist in der Darstellung der Fig. 1 das Halteelement 55, welches ein Bestandteil der Funktionskomponente ist (siehe Fig. 2), gezeigt.

**In** dem in Fig. 1 gezeigten Zustand liegt das Halteelement 55 an dem ersten Haltepunkt 15 an und befindet sich in der ersten Position 14. Wenn sich das Abtriebselement 30 entgegen dem Uhrzeigersinn dreht, dreht sich auch die Funktionskomponente entgegen dem Uhrzeigersinn und das Halteelement 55 bewegt sich entlang der Bewegungsrichtung 52 aus der ersten Position 14 in die zweite Position 16. **In** der zweiten Position 16 liegt das Halteelement 55 an dem zweiten Haltepunkt 17 an.

Das Antriebselement 20 und das Abtriebselement 30 können sich in entgegengesetzte Richtungen bewegen. **In** dem Beispiel der Fig. 1 wäre das also im Uhrzeigersinn oder entgegen dem Uhrzeigersinn, so dass sich auch das Halteelement 55 der Funktionskomponente in beide Richtungen entlang der Bewegungsrichtung 52 bewegen kann, um die Funktionskomponente wahlweise in die erste Position 14 oder die zweite Position 16 zu bringen.

Dieser Aufbau führt dazu, dass die Kinematik mit Antriebselement 20 und Abtriebselement 30 das Halteelement 55 und die Funktionskomponente aus der ersten Position 14 in die zweite Position 16 bringt, oder umgekehrt, wobei in der ersten Position und der zweiten Position der jeweilige Haltepunkt 15, 17 eine Haltekraft auf das Halteelement 55 ausübt und die Funktionskomponente in dieser Position hält. Somit kann trotz Spiel in der Kinematik zwischen Antriebselement 20 und Abtriebselement 30 die Funktionskomponente mit wiederholbarer und hoher Präzision in der entsprechenden Position gehalten werden.

Fig. 2 zeigt ein System 1 mit einer mechanischen Umschalteinheit 10, wie sie in Fig. 1 gezeigt ist, sowie einem Antrieb 60 und einer Funktionskomponente 50.

Der Antrieb 60 ist beispielsweise ein Elektromotor, welcher mit der Rotationswelle 22 des Antriebselementes 20 (siehe Fig. 1) gekoppelt ist. Wenn der Antrieb 60 das Antriebselement 20 in Drehung versetzt, wird die entsprechende Bewegung auf das Abtriebselement 30 übertragen. Die Antriebswelle 32 dreht dann die Funktionskomponente 50.

Die Funktionskomponente 50 kann so bewegt werden, dass sich das Halteelement 55 zwischen dem ersten Haltepunkt 15 und dem zweiten Haltepunkt 17 bewegt. **In** der ersten Position liegt das Halteelement 55 an dem ersten Haltepunkt 15 an. Insbesondere liegt das Halteelement 55 an der ersten Auflagefläche 18 an. Die erste Auflagefläche 18 ist Bestandteil des ersten Haltepunkts 15. Die Darstellung der Fig. 2 zeigt die Funktionskomponente 50 und das Halteelement 55 in der ersten Position. **In** der zweiten Position liegt das Halteelement 55 an dem zweiten Haltepunkt 17, insbesondere der zweiten Auflagefläche 19, an.

**In** der Nähe des ersten Haltepunkts 15 ist eine Vertiefung 18a angeordnet. Wenn die Funktionskomponente 50 in der ersten Position ist, liegt das Halteelement 55 in der Vertiefung 18a und wird zusätzlich von dem ersten Haltepunkt 15, beispielsweise einem magnetischen Element, in der ersten Position gehalten. Ebenso ist in der Nähe des zweiten Haltepunkts 17 eine Vertiefung 19a. **In** der zweiten Position liegt das Halteelement 55 in der Vertiefung 19a und wird ebenfalls zusätzlich von dem zweiten Haltepunkt 17, beispielsweise einem magnetischen Element, in der zweiten Position gehalten.

Das System 1 der Fig. 2 kann in einem beispielhaften Anwendungsfall wie folgt beschrieben werden:
Das System bezieht sich auf die Realisierung einer Kinematik, welche eine Rotation und eine präzise Positionierung von Funktionskomponenten wie optischen Komponenten und HF-Elementen ermöglicht. Das System nutzt das Prinzip eines Malteserkreuzgetriebes 20, 30, welches eine mechanische Entkopplung des Antriebes 60 in den Endlagen 14, 16 vom bewegten Teil (der Funktionskomponente 50) erlaubt, in Kombination mit einem magnetischen Anschlag- oder Rast-System, das von den Haltepunkten 15, 17 und den Vertiefungen 18a, 19a gebildet wird. Dabei werden die Funktionen des Bewegens und des Positionierens getrennt. Die Kombination dieser beiden speziellen Ansätze ermöglicht ein exaktes und wiederholbares Halten der Position der Funktionskomponente 50 unabhängig von der Genauigkeit des Antriebs 60 in Verbindung mit dem Getriebe 20, 30.

Die Antriebswelle 22 und die Rotorwelle 32 sind parallel angeordnet und über ein Malteserkreuzgetriebe 20, 30 miteinander verbunden. Die beiden Funktionen Bewegen und Halten sind voneinander getrennt. Die Drehbewegung wird durch den Antrieb 60 mit dem Antriebsrad 20 und dem Abtriebsrad 30 realisiert. Das exakte Halten wird durch ein magnetisches Anschlag- oder Rastsystem, nämlich die Haltepunkte 15, 16 in Verbindung mit dem Halteelement 55, gelöst.

Zur Funktionstrennung wird das Malteserkreuzgetriebe 20, 30 eingesetzt. Das Malteserkreuzgetriebe 20, 30 sorgt dafür, dass die Drehbewegung der Antriebswelle 22 als schrittweise Bewegung auf die Rotorwelle 32 übertragen wird. Das Malteserkreuz 30 ist eine scheibenförmige Komponente mit einem oder mehreren Schlitzen 34, wobei in dem Beispiel der Fig. 2 nur ein Schlitz 34 vorhanden ist. Diese Scheibe ist auf der Rotorwelle 32 angebracht. Die Antriebswelle 22 treibt einen exzentrisch gelagerten Stift 24 an. Bei Drehung der Antriebswelle 22 bewegt sich der Stift 23 entlang des Schlitzes 34 und dreht das Malteserkreuz 30 um einen Schritt weiter. Entgegen der gängigen Auslegung der Malteserkreuzgetriebe ist bei dieser Anwendung das Spiel zwischen dem Stift 24 und dem Schlitz 34 bewusst groß gewählt, da die finale Positionierung der Funktionskomponente 50 durch das magnetische Anschlag- oder Rastsystem erfolgt.

Nachdem die Funktionskomponente 50 durch das Malteserkreuzgetriebe 20, 30 in eine gewünschte Position bewegt wurde, kann der Antrieb noch in eine Ruheposition gedreht werden, bei welcher der Stift 24 nicht mehr im Eingriff mit dem Schlitz 34 ist. Das Schalten in die zweite Position wird durch Umkehr der Drehrichtung erreicht. Das magnetische Anschlag- oder Rastsystem hält die Funktionskomponente 50 exakt in Position. Bei starken äußeren Belastungen (z.B. Vibrationen) kann sich die Funktionskomponente 50 durch eine sperrende Kontur 36 des Malteserkreuzgetriebes nur innerhalb des Spielbereichs kurzzeitig aus der Position lösen. Anschließend stellt sich die exakte Position der Funktionskomponente 50 durch das magnetische Anschlag- oder Rastsystem erneut ein.

Bei Verwendung von einem magnetischen Rastsystem, statt magnetischen Anschlägen, ist ein Schalten ohne Richtungsumkehr möglich, jedoch mit geringerer Positioniergenauigkeit.

In dem Beispiel der Fig. 2 ermöglicht das Getriebe eine 90° Drehung der Funktionskomponente 50. Die exakte Positionierung erfolgt über magnetische Anschläge 15, 17. Das Trennen der Funktionen Bewegen und Halten ermöglicht es, einen Antrieb 60 sowie ein Getriebe 20, 30 mit geringen Genauigkeitsanforderungen einzusetzen.

Das Konzept ist auch auf andere Winkel und eine höhere Anzahl von Positionen anwendbar.

Durch das magnetische Anschlag- oder Rastsystem 15, 16 können die sehr hohen geforderten Genauigkeiten erzielt werden. Es kann ein kostengünstiger Antrieb 60 mit geringen Genauigkeitsanforderungen eingesetzt werden. Das Getriebespiel zwischen dem Antriebselement 20 und dem Abtriebselement 30 wirkt sich nicht auf die Positionierung bzw. Orientierung der Funktionskomponente 50 in der ersten Position oder der zweiten Position aus. Durch das Spiel in der Kopplung ist die mechanische Umschalteinheit zudem robust gegen Montagetoleranzen. Im stromlosen Betrieb kann der Antrieb 60 entkoppelt werden, ohne dass die Haltekraft an dem ersten und zweiten Haltepunkt 15, 17 beeinflusst wird. Nach dem Schalten der Funktionskomponente 50 aus der ersten Position in die zweite Position (oder umgekehrt) ist der Antriebsstrang von der Funktionskomponente 50 entkoppelt und wirkt bei Startlasten nicht auf die Funktionskomponente 50. Die sperrende Kontur 36 des Malteserkreuzgetriebes verhindert ein Verdrehen bei hohen mechanischen Belastungen.

Fig. 3 zeigt schematisch einen Satelliten 100, in welchem ein System 1 wie in Fig. 2 beschrieben angeordnet ist, um eine Funktionskomponente 50 an Bord des Satelliten zu positionieren und in einer gewünschten Position zu halten.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: System
- 10: mechanische Umschalteinheit
- 12: Gehäuse
- 14: erste Position
- 15: erster Haltepunkt
- 16: zweite Position
- 17: zweiter Haltepunkt
- 18: erste Auflagefläche
- 18a: erste Vertiefung
- 19: zweite Auflagefläche
- 19a: zweite Vertiefung
- 20: Antriebselement, Eingang
- 22: Rotationswelle, Mittelachse
- 24: Stift
- 30: Abtriebselement, Ausgang
- 32: Antriebswelle, Mittelachse
- 34: Schlitz, Eingriff
- 36: Kontur
- 50: Funktionskomponente
- 52: Bewegungsrichtung
- 55: Halteelement
- 60: Antrieb
- 100: Satellit

## Patentansprüche

1. Mechanische Umschalteinheit (10) zum wahlweisen Bewegen einer Funktionskomponente (50) aus einer ersten Position (14) in eine zweite Position (16), die mechanische Umschalteinheit (10) aufweisend:
ein Antriebselement (20), welches ausgestaltet ist, von einem Antrieb (60) in eine Bewegung versetzt zu werden;
ein Abtriebselement (30), welches mit dem Antriebselement (20) in Eingriff steht und ausgestaltet ist, von dem Antriebselement (20) in Bewegung versetzt zu werden;
wobei das Antriebselement (20) so mit dem Abtriebselement (30) in Eingriff steht, dass das Abtriebselement (30) aus der ersten Position (14) in die zweite Position (16), und umgekehrt, bewegbar ist und dabei die Funktionskomponente (50) aus der ersten Position (14) in die zweite Position (16), und umgekehrt, bewegt;
**dadurch gekennzeichnet, dass**
die mechanische Umschalteinheit (10) weiterhin aufweist:
einen ersten Haltepunkt (15);
einen zweiten Haltepunkt (17);
wobei der erste Haltepunkt (15) ausgestaltet ist, in der ersten Position (14) eine erste Haltekraft auf die Funktionskomponente (50) auszuüben und die Funktionskomponente (50) in der ersten Position (14) zu halten;
wobei der zweite Haltepunkt (17) ausgestaltet ist, in der zweiten Position (16) eine zweite Haltekraft auf die Funktionskomponente (50) auszuüben und die Funktionskomponente (50) in der zweiten Position (16) zu halten.

2. Mechanische Umschalteinheit (10) nach Anspruch 1,
wobei das Antriebselement (20) einen Stift (24) aufweist;
wobei das Abtriebselement (30) einen Schlitz (34) aufweist;
wobei der Stift (24) in den Schlitz (34) eingreift, um eine Bewegung des Antriebselementes (20) auf das Abtriebselement (30) zu übertragen.

3. Mechanische Umschalteinheit (10) nach Anspruch 1 oder 2,
wobei das Antriebselement (20) ein Antriebsrad ist, welches ausgestaltet ist, eine Rotationsbewegung auszuführen;
wobei das Abtriebselement (30) ein Abtriebsrad ist, welches ausgestaltet ist, eine Rotationsbewegung auszuführen.

4. Mechanische Umschalteinheit (10) nach einem der voranstehenden Ansprüche,
wobei der erste Haltepunkt (15) ein erstes magnetisches Element aufweist; und/oder
wobei der zweite Haltepunkt (17) ein zweites magnetisches Element aufweist.

5. Mechanische Umschalteinheit (10) nach einem der voranstehenden Ansprüche,
wobei der erste Haltepunkt (15) eine erste Auflagefläche (18) aufweist, wobei die erste Auflagefläche (18) ausgestaltet ist, dass die Funktionskomponente (50) in der ersten Position (14) auf der ersten Auflagefläche (18) aufliegt; und/oder
wobei der zweite Haltepunkt (17) eine zweite Auflagefläche (19) aufweist, wobei die zweite Auflagefläche (19) ausgestaltet ist, dass die Funktionskomponente (50) in der zweiten Position (16) auf der zweiten Auflagefläche (19) aufliegt.

6. Mechanische Umschalteinheit (10) nach einem der voranstehenden Ansprüche,
wobei der erste Haltepunkt (15) eine erste Vertiefung (18a) aufweist, wobei die erste Vertiefung (18a) ausgestaltet ist, dass die Funktionskomponente (50) in der ersten Position (14) in der ersten Vertiefung (18a) einrastet; und/oder
wobei der zweite Haltepunkt (17) eine zweite Vertiefung (19a) aufweist, wobei die zweite Vertiefung (19a) ausgestaltet ist, dass die Funktionskomponente (50) in der zweiten Position (16) in der zweiten Vertiefung (19a) einrastet.

7. Mechanische Umschalteinheit (10) nach einem der voranstehenden Ansprüche,
wobei das Antriebselement (20) so mit dem Abtriebselement (30) gekoppelt ist, dass das Abtriebselement (30) in zwei entgegengesetzte Richtungen (52) bewegbar ist.

8. System (1), aufweisend:
eine mechanische Umschalteinheit (10) nach einem der voranstehenden Ansprüche;
einen Antrieb (60);
eine Funktionskomponente (50);
wobei der Antrieb (60) mit dem Antriebselement (20) derart gekoppelt ist, dass eine Bewegung des Antriebs (60) auf das Antriebselement (20) übertragen wird;
wobei die Funktionskomponente (50) mit dem Abtriebselement (30) derart gekoppelt ist, dass eine Bewegung des Abtriebselementes (30) auf die Funktionskomponente (50) übertragen wird.

9. System (1) nach Anspruch 8,
wobei die Funktionskomponente (50) ein optisches Element oder eine Hochfrequenzkomponente ist.

10. Satellit (100), aufweisend ein System (1) nach Anspruch 8 oder 9.

## Claims

1. Mechanical switching unit (10) for selectively moving a functional component (50) from a first position (14) into a second position (16), the mechanical switching unit (10) comprising:
a drive element (20) which is configured to be set in motion by a drive (60);
an output element (30) which is in engagement with the drive element (20) and is configured to be set in motion by the drive element (20);
wherein the drive element (20) is in engagement with the output element (30) such that the output element (30) is movable from the first position (14) into the second position (16), and vice versa, and thereby moves the functional component (50) from the first position (14) into the second position (16), and vice versa;
**characterized in that**
the mechanical switching unit (10) further comprises:
a first holding point (15);
a second holding point (17);
wherein the first holding point (15) is configured to exert a first holding force on the functional component (50) in the first position (14) and to hold the functional component (50) in the first position (14);
wherein the second holding point (17) is configured to exert a second holding force on the functional component (50) in the second position (16) and to hold the functional component (50) in the second position (16).

2. Mechanical switching unit (10) according to claim 1,
wherein the drive element (20) comprises a pin (24);
wherein the output element (30) comprises a slot (34);
wherein the pin (24) engages the slot (34) in order to transmit a movement of the drive element (20) to the output element (30).

3. Mechanical switching unit (10) according to claim 1 or 2,
wherein the drive element (20) is a drive wheel which is configured to perform a rotational movement;
wherein the output element (30) is an output wheel which is configured to perform a rotational movement.

4. Mechanical switching unit (10) according to one of the preceding claims,
wherein the first holding point (15) comprises a first magnetic element; and/or
wherein the second holding point (17) comprises a second magnetic element.

5. Mechanical switching unit (10) according to one of the preceding claims,
wherein the first holding point (15) comprises a first contact surface (18), wherein the first contact surface (18) is configured such that the functional component (50) rests on the first contact surface (18) in the first position (14); and/or
wherein the second holding point (17) comprises a second contact surface (19), wherein the second contact surface (19) is configured such that the functional component (50) rests on the second contact surface (19) in the second position (16).

6. Mechanical switching unit (10) according to one of the preceding claims,
wherein the first holding point (15) comprises a first recess (18a), wherein the first recess (18a) is configured such that the functional component (50) engages in the first recess (18a) in the first position (14); and/or
wherein the second holding point (17) comprises a second recess (19a), wherein the second recess (19a) is configured such that the functional component (50) engages in the second recess (19a) in the second position (16).

7. Mechanical switching unit (10) according to one of the preceding claims,
wherein the drive element (20) is coupled to the output element (30) such that the output element (30) is movable in two opposite directions (52).

8. System (1), comprising:
a mechanical switching unit (10) according to one of the preceding claims;
a drive (60);
a functional component (50);
wherein the drive (60) is coupled to the drive element (20) such that a movement of the drive (60) is transmitted to the drive element (20);
wherein the functional component (50) is coupled to the output element (30) such that a movement of the output element (30) is transmitted to the functional component (50).

9. System (1) according to claim 8,
wherein the functional component (50) is an optical element or a highfrequency component.

10. Satellite (100), comprising a system (1) according to claim 8 or 9.

## Revendications

1. Unité de commutation mécanique (10) pour déplacer sélectivement un composant fonctionnel (50) d'une première position (14) à une deuxième position (16), l'unité de commutation mécanique (10) comprenant:
un élément d'entraînement (20) qui est configuré pour être mis en mouvement par un entraînement (60);
un élément de sortie (30) qui est en prise avec l'élément d'entraînement (20) et qui est configuré pour être mis en mouvement par l'élément d'entraînement (20);
dans laquelle l'élément d'entraînement (20) est en prise avec l'élément de sortie (30) de sorte que l'élément de sortie (30) puisse être déplacé de la première position (14) à la deuxième position (16), et vice versa, et déplace ainsi le composant fonctionnel (50) de la première position (14) à la deuxième position (16), et vice versa;
**caractérisée en ce que**
l'unité de commutation mécanique (10) comprend en outre:
un premier point de maintien (15);
un deuxième point de maintien (17);
dans laquelle le premier point de maintien (15) est configuré pour exercer une première force de maintien sur le composant fonctionnel (50) dans la première position (14) et pour maintenir le composant fonctionnel (50) dans la première position (14);
dans laquelle le deuxième point de maintien (17) est configuré pour exercer une deuxième force de maintien sur le composant fonctionnel (50) dans la deuxième position (16) et pour maintenir le composant fonctionnel (50) dans la deuxième position (16).

2. Unité de commutation mécanique (10) selon la revendication 1,
dans laquelle l'élément d'entraînement (20) comprend une broche (24);
dans laquelle l'élément de sortie (30) comprend une fente (34);
dans laquelle la broche (24) vient en prise avec la fente (34) pour transmettre un mouvement de l'élément d'entraînement (20) à l'élément de sortie (30).

3. Unité de commutation mécanique (10) selon la revendication 1 ou 2,
dans laquelle l'élément d'entraînement (20) est une roue d'entraînement qui est configurée pour effectuer un mouvement de rotation;
dans laquelle l'élément de sortie (30) est une roue de sortie qui est configurée pour effectuer un mouvement de rotation.

4. Unité de commutation mécanique (10) selon l'une des revendications précédentes,
dans laquelle le premier point de maintien (15) comprend un premier élément magnétique; et/ou
dans laquelle le deuxième point de maintien (17) comprend un deuxième élément magnétique.

5. Unité de commutation mécanique (10) selon l'une des revendications précédentes,
dans laquelle le premier point de maintien (15) comprend une première surface d'appui (18), dans laquelle la première surface d'appui (18) est configurée pour que le composant fonctionnel (50) repose sur la première surface d'appui (18) dans la première position (14); et/ou
dans laquelle le deuxième point de maintien (17) comprend une deuxième surface d'appui (19), dans laquelle la deuxième surface d'appui (19) est configurée pour que le composant fonctionnel (50) repose sur la deuxième surface d'appui (19) dans la deuxième position (16).

6. Unité de commutation mécanique (10) selon l'une des revendications précédentes,
dans laquelle le premier point de maintien (15) comprend un premier renfoncement (18a), dans laquelle le premier renfoncement (18a) est configuré pour que le composant fonctionnel (50) s'enclenche dans le premier renfoncement (18a) dans la première position (14); et/ou
dans laquelle le deuxième point de maintien (17) comprend un deuxième renfoncement (19a), dans laquelle le deuxième renfoncement (19a) est configuré pour que le composant fonctionnel (50) s'enclenche dans le deuxième renfoncement (19a) dans la deuxième position (16).

7. Unité de commutation mécanique (10) selon l'une des revendications précédentes,
dans laquelle l'élément d'entraînement (20) est couplé à l'élément de sortie (30) de sorte que l'élément de sortie (30) puisse être déplacé dans deux directions opposées (52).

8. Système (1), comprenant:
une unité de commutation mécanique (10) selon l'une des revendications précédentes;
un entraînement (60);
un composant fonctionnel (50);
dans lequel l'entraînement (60) est couplé à l'élément d'entraînement (20) de telle sorte qu'un mouvement de l'entraînement (60) est transmis à l'élément d'entraînement (20);
dans lequel le composant fonctionnel (50) est couplé à l'élément de sortie (30) de telle sorte qu'un mouvement de l'élément de sortie (30) est transmis au composant fonctionnel (50).

9. Système (1) selon la revendication 8,
dans lequel le composant fonctionnel (50) est un élément optique ou un composant haute fréquence.

10. Satellite (100), comprenant un système (1) selon la revendication 8 ou 9.
